# EUROPÄISCHE PATENTSCHRIFT

(11) **EP 3 150 872 B1**
(45) Veröffentlichungstag und Bekanntmachung des Hinweises auf die Patenterteilung: **25.03.2020**
(21) Anmeldenummer: 16182636.7
(22) Anmeldetag: 03.08.2016
(51) Int. Cl.: F16C 32/04, F04D 19/04, H01F 41/02, H01F 7/02

(54) **VERFAHREN ZUM REDUZIEREN EINES MAGNETISCHEN STREUVEKTORFELDS EINER ROTATIONSEINHEIT MIT EINEM PERMANENTMAGNETLAGER FÜR EINE VAKUUMPUMPE MITTELS EINES KOMPENSATIONSMAGNETEN SOWIE ROTATIONSEINHEIT UND VAKUUMPUMPE**
METHOD FOR REDUCING A MAGNETIC STRAY VECTOR FIELD OF A ROTARY UNIT WITH A MAGNETIC BEARING COMPRISING PERMANENT MAGNETS BY PROVIDING A COMPENSATING MAGNET, ROTARY UNIT AND VACUUM PUMP
PROCÉDÉ DE RÉDUCTION D'UN CHAMP VECTORIEL DE DISPERSION MAGNÉTIQUE D'UNE UNITÉ ROTATIVE À PALIER MAGNÉTIQUE AVEC AIMANTS POUR UNE POMPE À VIDE PAR UN AIMANT DE COMPENSATION, UNITÉ ROTATIVE ET POMPE À VIDE

(30) Priorität: 18.08.2015 DE 102015113681
(43) Veröffentlichungstag der Anmeldung: 05.04.2017
(73) Patentinhaber: PFEIFFER VACUUM GMBH, 35614 Asslar (DE)
(72) Erfinder: Wirth, Adrian, 35582 Wetzlar (DE); Rippl, Andreas, 35578 Wetzlar (DE)
(74) Vertreter: Manitz Finsterwald Patent- und Rechtsanwaltspartnerschaft mbB

(56) Entgegenhaltungen:
- EP-A2- 1 477 695
- EP-A2- 2 708 753
- WO-A2-2012/153109
- US-A1- 2004 227 421

## Beschreibung

Die vorliegende Erfindung betrifft ein Verfahren zum Reduzieren eines magnetischen Streuvektorfelds einer Vakuumpumpe, insbesondere einer Turbomolekularpumpe, oder einer Rotationseinheit für eine Vakuumpumpe, insbesondere für eine Turbomolekularpumpe, und eine Vakuumpumpe, insbesondere Turbomolekularpumpe, bzw. eine Rotationseinheit für eine Vakuumpumpe, insbesondere für eine Turbomolekularpumpe, welche einen Rotor und einen Stator mit wenigstens einem Permanentmagnetlager aufweist, welches zur gegenseitigen drehbaren Lagerung des Rotors und des Stators der Vakuumpumpe oder der Rotationseinheit ausgebildet ist.

Ein Verfahren gemäß dem Oberbegriff des Anspruchs 1 zum Reduzieren eines magnetischen Streufelds einer Vakuumpumpe oder einer Rotationseinheit für eine Vakuumpumpe ist aus EP 2 708 753 A2 bekannt.

Aus der WO 2012/153109 ist ein Verfahren zum Zusammenbauen eines wenigstens vier Permanentmagnetringe aufweisenden Magnetlagers für eine Vakuumpumpe bekannt, bei welchem für jeden Ringmagneten dessen magnetisches Streuvektorfeld zumindest bzgl. der 1. und 2. Ordnung in Bezug auf einen Referenzpunkt gemessen wird, eine optimale Anordnung für die Ringmagnete berechnet wird, in welcher die Ringmagnete bei sich drehendem Magnetlager ein minimales zeitveränderliches Magnetfeld erzeugen, und die Ringmagnete in der berechneten optimalen Anordnung zusammengebaut werden.

Der vorliegenden Erfindung liegt die Aufgabe zugrunde, ein verbessertes Verfahren zum Reduzieren eines magnetischen Streuvektorfelds einer Vakuumpumpe oder einer Rotationseinheit für eine Vakuumpumpe bereitzustellen, mit dem es insbesondere möglich ist, auch bei stärker fluktuierender Qualität der magnetischen Eigenschaften der das Permanentmagnetlager bildenden Permanentmagnete eine relevante Reduzierung oder eventuell sogar eine Kompensation wenigstens einer Komponente des Streuvektorfelds zu bewirken. Aufgabe der Erfindung ist ferner die Angabe einer Vakuumpumpe oder einer Rotationseinheit für eine Vakuumpumpe, die bei ihrem Betreib ein geringes magnetisches Streuvektorfeld aufweist.

Die Aufgabe wird durch ein Verfahren mit den Merkmalen des Anspruchs 1 bzw. durch eine Vakuumpumpe bzw. Rotationseinheit mit den Merkmalen der Ansprüche 10 oder 11 gelöst. Bevorzugte Ausführungsformen und Weiterbildungen der Erfindung sind in den abhängigen Ansprüchen angegeben.

Erfindungsgemäß wird ein Verfahren zum Reduzieren eines magnetischen Streuvektorfelds einer Vakuumpumpe, insbesondere einer Turbomolekularpumpe, oder einer Rotationseinheit für eine Vakuumpumpe, insbesondere für eine Turbomolekularpumpe beschrieben, wobei das magnetische Streuvektorfeld zumindest teilweise von wenigstens einem Permanentmagnetlager erzeugt wird, welches zur gegenseitigen drehbaren Lagerung eines Rotors und eines Stators der Vakuumpumpe oder der Rotationseinheit ausgebildet ist und aus mehreren Paaren von Ringmagneten gebildet wird, wobei jeweils ein Ringmagnet eines Paars auf dem Stator und der andere Ringmagnet des Paars auf dem Rotor angeordnet ist, und wobei das Verfahren die Schritte umfasst, dass
- wenigstens eine Komponente des Streuvektorfelds an wenigstens einem Referenzpunkt bestimmt wird, und
- das Magnetfeld eines Kompensationsmagneten derart ausgewählt oder dauerhaft verändert wird, dass dieses die Komponente des Streuvektorfelds wenigstens am Referenzpunkt reduziert, bevorzugt kompensiert, wobei es sich bei dem Kompensationsmagneten um einen zusätzlich zu den Ringmagnetpaaren des Permanentmagnetlagers vorgesehenen Permanentmagneten handelt.

Vorteilhaft an dem erfindungsgemäßen Verfahren ist unter anderem, dass nicht das magnetische Streuvektorfeld jedes Magneten des Permanentlagers gemessen werden muss. Vielmehr reicht es aus, wenn am Referenzpunkt die zu reduzierende bzw. zu kompensierende Streuvektorfeldkomponente gemessen wird, die vom gesamten, zusammengesetzten Permanentmagnetlager erzeugt wird. Bei dem erfindungsgemäßen Verfahren wird daher nicht auf die Streuvektorfelder der einzelnen Magnetringe des Permanentmagnetlagers abgestellt, sondern auf das resultierende magnetische Streuvektorfeld der Gesamtanordnung des Permanentmagnetlagers, welches durch dauerhaftes Verändern des Magnetfelds des Kompensationsmagneten wenigstens am Referenzpunkt reduziert bzw. kompensiert wird. Störende magnetische Einflüsse des Permanentmagnetlagers können somit zumindest am Referenzpunkt reduziert oder sogar eliminiert werden. Außerdem können die einzelnen Permanentmagnete, aus denen das Lager zusammengesetzt wird, im Hinblick auf ihre permanentmagnetische Ausrichtung der Magnetisierung eine geringere räumliche Konstanz aufweisen, da gemäß dem erfindungsgemäßen Verfahren eine Reduzierung des resultierenden magnetischen Streuvektorfelds erreicht werden kann.

Das Streuvektorfeld kann gemessen werden, indem das Permanentmagnetlager in einer Messvorrichtung angeordnet wird, mit der das rotorseitige Teil des Permanentlagers, wie wenn es am Rotor der Vakuumpumpe oder der Rotationseinheit angeordnet wäre, gedreht werden kann, während in einem bestimmten Referenzpunkt wenigstens die eine Komponente des Streuvektorfelds aufgenommen wird.

Die Messung kann auch an der Pumpe oder Rotationseinheit durchgeführt werden, nachdem das Permanentmagnetlager eingebaut wurde. Eine derartige Messung hat den Vorteil, dass in der gemessenen Komponente auch die vom elektrischen Antrieb der Vakuumpumpe oder der Rotationseinheit bewirkten Beiträge und/oder auch die von anderen Einrichtungen bzw. Bauteilen der Vakuumpumpe bzw. Rotationseinheit bewirkten Beiträge erfasst sein können. Diese Beiträge lassen sich ebenfalls durch das veränderte Magnetfeld des Kompensationsmagneten reduzieren oder eventuell sogar kompensieren. Eine separate Abschirmung zur Reduzierung bzw. Kompensation dieser Beiträge zum magnetischen Streuvektorfeld kann daher eingespart werden.

Das Magnetfeld des Kompensationsmagneten wird insbesondere derart verändert, dass der erzielte Effekt der Reduzierung bzw. Kompensierung der Komponente des Streuvektorfelds dann am größten ist, wenn der Kompensationsmagnet in seiner vorgesehenen Einbauposition an der Pumpe oder an der Rotationseinheit angeordnet ist.

Bei der vorstehend genannten Alternative, gemäß der das Magnetfeld eines Kompensationsmagneten derart ausgewählt wird, dass dieses die Komponente des Streuvektorfelds wenigstens am Referenzpunkt reduziert oder bevorzugt kompensiert, kann zum Beispiel vorgesehen sein, dass der Kompensationsmagnet aus einer Vielzahl von, zum Beispiel in einem Lager vorgehaltenen, Kompensationsmagneten ausgewählt wird. Bei dem ausgewählten Kompensationsmagneten ist dabei, mehr oder weniger zufällig, das Magnetfeld gerade so ausgebildet, dass es in gewünschter Art und Weise die Komponente des Streuvektorfelds wenigstens am Referenzpunkt reduziert oder bevorzugt kompensiert.

Vorzugsweise wird am Referenzpunkt eine Funktion der Komponente des Streuvektorfelds bei sich um eine Rotationsachse drehendem rotorseitigem Teil des Permanentmagnetlagers in Abhängigkeit von der Winkelstellung des rotorseitigen Teils des Permanentmagnetlagers für wenigstens einen vollständigen Umlauf des rotorseitigen Teils des Permanentlagers um die Rotationsachse gemessen und das Magnetfeld des Kompensationsmagneten wird derart ausgewählt oder verändert, dass es, insbesondere in einer für den Kompensationsmagneten vorgesehenen Einbauposition, unabhängig von der Winkelstellung des rotorseitigen Teils des Permanentlagers die am Referenzpunkt messbare bzw. gemessene Komponente des Streuvektorfelds reduziert oder zumindest annähernd kompensiert.

Das Magnetfeld kann auch derart ausgewählt oder verändert werden, dass es, insbesondere in einer für den Kompensationsmagneten vorgesehenen Einbauposition, unabhängig von der Winkelstellung des rotorseitigen Teils des Permanentlagers wenigstens die am Referenzpunkt messbaren zeitlich veränderlichen Anteile der Komponente reduziert oder bevorzugt kompensiert. Am Referenzpunkt ist bei sich drehender Vakuumpumpe oder Rotationseinheit somit im Wesentlichen nur noch ein zumindest annähernd konstantes magnetisches Streufeld messbar.

Wenn eine Messung der Komponente des Streuvektorfelds bei in der Vakuumpumpe oder Rotationseinheit eingebautem Permanentmagnetlager erfolgt, so entspricht eine Drehbewegung des rotorseitigen Teils des Permanentmagnetlagers einer Drehbewegung des Rotors der Vakuumpumpe bzw. Rotationseinheit. Der Anschaulichkeit halber wird nachfolgend auch auf die Drehbewegung des Rotors oder auf dessen Winkelstellung abgestellt. Damit sollen aber nicht die Varianten ausgenommen werden, bei denen das Streuvektorfeld des Permanentmagnetlagers gemessen wird, wenn das Permanentmagnetlager außerhalb der Vakuumpumpe oder Rotationseinheit angeordnet ist, zumal eine Messeinrichtung auch eine Art Rotor als Halterung für den rotorseitigen Teil des Permanentmagnetlagers aufweisen wird, um dessen Drehbewegung in der Vakuumpumpe oder Rotationseinheit simulieren zu können. Wenn also nachfolgend von einer Drehbewegung des Rotors der Vakuumpumpe bzw. Rotationseinheit oder dessen Winkelstellung die Rede ist, sollen - soweit anwendbar - diese Ausführungen auch für diejenigen Varianten gelten, bei denen Messungen am Permanentmagnetlager mittels einer Messeinrichtung und nicht direkt an einer Vakuumpumpe oder Rotationseinheit durchgeführt werden.

Nach einer Variante der Erfindung kann eine Funktion der Komponente des Streuvektorfelds bei sich drehendem Rotor in Abhängigkeit von der Winkelstellung des Rotors für wenigstens einen vollständigen Umlauf des Rotors um seine Drehachse gemessen werden und das Magnetfeld des Kompensationsmagneten wird vorzugsweise derart verändert, dass es wenigstens die am Referenzpunkt gemessenen, bei sich drehendem Rotor zeitlich veränderlichen Anteile der Komponente reduziert oder bevorzugt kompensiert. Nach der Reduzierung bzw. Kompensation des Streumagnetfelds weist die Komponente am Referenzpunkt bei sich drehendem Rotor vorzugsweise nur noch einen im Wesentlichen konstanten Anteil, aber keinen oder nur noch einen geringen zeitlich veränderlichen Anteil auf.

Das Magnetfeld des Kompensationsmagneten kann allerdings auch so verändert werden, dass es am Referenzpunkt bei sich drehendem Rotor sowohl den zeitlich veränderlichen Anteil als auch den konstant bleibenden Anteil der Streuvektorfeldkomponente zumindest im Wesentlich auf null reduziert.

Bei der Komponente des Streuvektorfelds handelt es sich - bezogen auf die Drehachse des Rotors - vorzugsweise um eine axiale, radiale oder azimutale Streuvektorfeldkomponente. Bzgl. jeder Komponente kann am Referenzpunkt deren Betrag und deren Richtung gemessen werden. Bei einer radialen Komponenten kann beispielsweise deren Betrag gemessen und bestimmt werden, ob sie nach radial außen oder radial innen gerichtet ist.

Besonders bevorzugt wird am Referenzpunkt die radiale Komponente des magnetischen Streuvektorfelds gemessen. Weiter bevorzugt wird ferner noch die axiale Komponente des magnetischen Streuvektorfelds gemessen. Vorzugsweise wird die azimutale Streuvektorfeldkomponente nicht gemessen und somit auch nicht reduziert bzw. kompensiert.

Bevorzugt wird für eine zu reduzierende Streuvektorfeldkomponente wenigstens ein separater Kompensationsmagnet zur Reduktion bzw. Kompensation dieser Streuvektorfeldkomponente verwendet, der nicht zur Reduktion bzw. Kompensation einer weiteren Streuvektorfeldkomponente eingesetzt wird. Zum Beispiel können zur Reduktion der radialen Streuvektorfeldkomponente ein erster Kompensationsmagnet und zur Reduktion der axialen Streuvektorfeldkomponente ein zweiter Kompensationsmagnet eingesetzt werden. Vorteilhaft daran ist, dass für jede zu reduzierende Komponente ein Kompensationsmagnet individuell ausgewählt werden kann, der sich zur Reduzierung dieser Komponente besonders gut eignet. Beispielsweise kann zur Reduzierung der radialen Streuvektorfeldkomponente ein Kompensationsmagnet ausgewählt werden, welcher selbst ein Streuvektorfeld mit einem verhältnismäßig großen radialen Anteil aufweist. Dementsprechend kann zur Reduzierung der axialen Streuvektorfeldkomponente ein Kompensationsmagnet ausgewählt werden, welcher ein Streuvektorfeld mit einem verhältnismäßig großen axialen Anteil aufweist und sich daher gut zur Reduzierung der radialen Streuvektorfeldkomponente eignet.

Alternativ zu der typischerweise anzutreffenden Aufbauweise des Permanentmagnetlagers von Turbomolekularpumpen in der zuvor beschriebenen Ausprägung von alternierend gestapelten Magnetringen besitzt das erfindungsgemäße Verfahren keine Einschränkung bei der Korrektur des Magnetfelds von Magnetlagern in einer monolithischen Ausprägung, in welcher die gestapelten Einzelringe exklusive des Korrekturringes durch einen baugleichen magnetischen Hohlzylinder mit entsprechender Multipolmagnetisierung ersetzt werden.

Der Kompensationsmagnet wird bevorzugt vor oder nach seiner Bearbeitung auf der Seite des Rotors in der Vakuumpumpe oder der Rotationseinheit angeordnet. Durch die Anordnung am Rotor kann die Lagersteifigkeit erhöht werden. Außerdem können auch mehrere Kompensationsmagnete vorgesehen sein.

In einer abgewandelten Form der Magnetlagerausprägung mit Kompensationsring kann dieser auch Teil des monolithischen Magnetlagerdesigns sein und beispielsweise als einer der am axialen Ende des magnetischen Hohlzylinders des Rotors lokalisierten Polbereiche ausgeprägt sein. Der Kompensationsring ist dann kein Ring mehr im eigentlichen Sinne, sondern Teil des magnetischen Hohlzylinders, insbesondere ein ringförmiger Abschnitt des Hohlzylinders.

Vorzugsweise umfasst das Permanentmagnetlager wenigstens einen magnetischen Hohlzylinder, der zwei oder mehr in axialer Richtung aufeinanderfolgende Abschnitte aufweist, wobei zueinander benachbarte Abschnitte eine zumindest im Wesentlichen entgegengesetzte Magnetpolorientierung aufweisen.

Der Kompensationsmagnet kann von einem zu dem Hohlzylinder separaten Ringmagnet gebildet werden. Der Kompensationsmagnet kann alternativ in einem Abschnitt des Hohlzylinders ausgebildet sein. Der Kompensationsmagnet kann somit in den Hohlzylinder integriert sein. Das von dem Abschnitt des Hohlzylinders erzeugte Magnetfeld kann in der entsprechenden Weise verändert werden wie das Magnetfeld eines externen Kompensationsmagneten, also zum Beispiel durch lokales Verändern der Form des Abschnitts und/oder durch lokales Verändern der materialspezifischen permanentmagnetischen Eigenschaften des Abschnitts des Hohlzylinders, welcher den Kompensationsmagneten bildet.

Der Hohlzylinder besteht vorzugsweise aus magnetischem oder magnetisierbarem Material.

Nach einer bevorzugten Weiterbildung der Erfindung wird das Magnetfeld des Kompensationsmagneten verändert durch lokales Verändern der Form des Kompensationsmagneten, insbesondere durch lokales Entfernen von Material vom Kompensationsmagneten, und/oder durch lokales Verändern der materialspezifischen permanentmagnetischen Eigenschaften des Kompensationsmagneten, insbesondere durch wenigstens teilweises lokales Entmagnetisieren.

Das Material kann durch ein spanabhebendes Verfahren, wie etwa durch Schleifen, Bohren und/oder Drehen, oder durch Laserbearbeitung entfernt werden.

Ein wenigstens teilweises lokales Entmagnetisieren kann durch lokales Erwärmen, zum Beispiel durch Einstrahlen von Laserstrahlung, erfolgen. Dabei wird der Kompensationsmagnet lokal auf eine Temperatur erwärmt, bei der das permanentmagnetische Material des Kompensationsmagneten wenigstens teilweise seine permanentmagnetischen Eigenschaften dauerhaft verliert. Die Laserstrahlung kann lokal auf einen bestimmten Bereich des Kompensationsmagneten gerichtet werden, um diesen Bereich zu erwärmen und dadurch zumindest teilweise zu entmagnetisieren.

Vorzugsweise wird anhand einer gemessenen Funktion der Komponente des Streuvektorfelds in Abhängigkeit von der Winkelstellung des rotorseitigen Teils des Permanentmagnetlagers eine Bearbeitungsfunktion zur Steuerung einer Bearbeitungseinrichtung, insbesondere mit wenigstens einem Laser, bestimmt, wobei in der Bearbeitungsfunktion spezifiziert wird, wie die Form des Kompensationsmagneten und/oder dessen materialspezifische permanentmagnetische Eigenschaften zu verändern sind, und die Bearbeitungseinrichtung wird anhand der Bearbeitungsfunktion gesteuert, um die Form und/oder die materialspezifischen permanentmagnetischen Eigenschaften des Kompensationsmagneten zu bearbeiten.

Die Funktion der Komponente K(ϕ) des Streuvektorfelds kann den Betrag bzw. die Stärke der Komponente als eine kontinuierliche oder diskontinuierliche Funktion in Abhängigkeit von der Winkelstellung ϕ des Rotors angeben. Damit der Kompensationsmagnet die Komponente des Streuvektorfelds am Referenzpunkt wenigstens im Wesentlichen kompensieren kann, ist nach einer bevorzugten Ausgestaltung der Erfindung vorgesehen, dass das Magnetfeld M(ϕ) des Kompensationsmagneten derart verändert wird, dass dessen Verlauf in Abhängigkeit von der Winkelstellung ϕ des Rotors zumindest annähernd dem Komplementären der Funktion der Streuvektorfeldkomponenten entspricht: M(ϕ) ≈ - K (ϕ) für alle ϕ von 0 bis 360 Grad.

Zur Bestimmung der Bearbeitungsfunktion können, insbesondere unter Verwendung empirisch gewonnener Daten Parameter berechnet werden, die angeben, wie und wo (bezogen auf die Winkelstellung) der Kompensationsmagnet durch lokales Erwärmen und/oder Materialabtrag bearbeitet werden muss, damit bei dem Kompensationsmagneten der Verlauf des Magnetfelds in Abhängigkeit von der Winkelstellung dem Komplementären der Funktion der Streuvektorfeldkomponenten entspricht. Die errechneten Parameter können in Steuerbefehle für die Bearbeitungseinrichtung zur entsprechenden Bearbeitung des Kompensationsmagneten umgesetzt werden.

Die Bearbeitungseinrichtung kann dabei eine Vorrichtung zum lokalen Abtragen von Material vom Kompensationsmagneten aufweisen, beispielsweise einen Fräser oder Bohrer.

Die Bearbeitungseinrichtung kann einen Laser aufweisen, mittels dem der Kompensationsmagnet zur wenigstens teilweisen lokalen Entmagnetisierung lokal erwärmt werden kann. Der Kompensationsmagnet kann gegenüber dem Fokus des vom Laser bereitgestellten Laserstrahls verdrehbar bzw. verstellbar sein, so dass ein jeweiliger zu bearbeitender Bereich des Kompensationsmagneten in den Fokus gebracht werden kann. Besonders vorteilhaft an der Verwendung eines Lasers zur Bearbeitung des Kompensationsmagnets ist, dass eine genaue lokale Bearbeitung möglich ist. Außerdem ist eine Bearbeitung des Kompensationsmagneten in seiner vorgesehenen Einbauposition möglich.

Vor der Bearbeitung des Kompensationsmagneten wird dessen Magnetfeld, insbesondere die entsprechende Streuvektorfeldkomponente, bei sich drehendem Rotor in Abhängigkeit von der Winkelstellung des Rotors am Referenzpunkt gemessen. Diese Messung findet vorzugsweise ohne Permanentmagnetlager statt. Anschließend kann dann das Magnetfeld des Kompensationsmagneten derart dauerhaft verändert werden, dass die entsprechende Magnetfeldkomponente in Abhängigkeit von der Winkelstellung des Rotors einen Verlauf aufweist, welcher zumindest im Wesentlichen dem Komplementären des Verlaufs der Streuvektorfeldkomponente über der Winkelstellung des Rotors entspricht.

Als Kompensationsmagnet wird insbesondere ein Permanentmagnet, insbesondere Ringmagnet, bereitgestellt, der eine deutliche Magnetisierung in der zu reduzierenden bzw. zu kompensierenden Streuvektorfeldkomponente aufweist. Durch Bearbeiten des Magnets, insbesondere durch Verändern von dessen Form und oder durch lokales Erwärmen, kann bei einem derartigen Magneten die Komponente betragsmäßig über einen verhältnismäßig großen Bereich verändert und somit eine Reduzierung bzw. Kompensation der Streuvektorfeldkomponenten des Permanentmagnetlagers erreicht werden.

Der Kompensationsmagnet kann in seiner Einbauposition bearbeitet oder zuerst bearbeitet und dann in seiner Einbauposition an der Vakuumpumpe oder an der Rotationseinheit angeordnet werden.

Die Erfindung betrifft auch eine Vakuumpumpe, insbesondere Turbomolekularpumpe, oder Rotationseinheit für eine Vakuumpumpe, insbesondere für eine Turbomolekularpumpe, die erhalten ist durch ein erfindungsgemäß ausgeführtes Verfahren.

Die Erfindung betrifft außerdem eine Vakuumpumpe, insbesondere Turbomolekularpumpe, oder Rotationseinheit für eine Vakuumpumpe, insbesondere für eine Turbomolekularpumpe, mit einem Rotor, einem Stator und wenigstens einem Permanentmagnetlager, welches zur gegenseitigen drehbaren Lagerung eines Rotors und eines Stators der Vakuumpumpe oder der Rotationseinheit ausgebildet ist und aus mehreren Paaren von Ringmagneten gebildet ist, wobei jeweils ein Ringmagnet eines Paars auf dem stator und der anderen Ringmagnet des Paars auf dem Rotor angeordnet ist, wobei das Magnetfeld eines Kompensationsmagneten derart ausgebildet oder verändert wurde, dass es wenigstens eine Komponente des magnetischen Streuvektorfelds des Permanentmagnetlagers an wenigstens einem Referenzpunkt außerhalb der Vakuumpumpe oder der Rotationseinheit reduziert und bevorzugt kompensiert. Bei dem Kompensationsmagneten handelt es sich um einen zusätzlich zu den Ringmagnetpaaren des Permanentmagnetlagers vorgesehenen Permanentmagneten.

In der Vakuumpumpe oder der Rotationseinheit, insbesondere im Gehäuse des Stators, kann wenigstens ein Zugangskanal zu dem in seiner vorgesehenen Einbauposition angeordneten Kompensationsmagnet ausgebildet sein, wobei der Zugangskanal eine lokale Beaufschlagung des Kompensationsmagneten mit von außerhalb der Vakuumpumpe oder Rotationseinheit kommendem Laserlicht erlaubt.

Der Kompensationsmagnet ist bevorzugt an einem axialen Ende des Rotors, insbesondere oberhalb eines rotorseitigen permanentmagnetischen Ringstapels des Magnetlagers, angeordnet. Dadurch ist der Kompensationsmagnet für die Bearbeitung mit Laserstrahlung gut zugänglich.

Die Aussagen zu dem Kompensationsmagnet gelten analog auch für einen Abschnitt eines magnetischen Hohlzylinders mit Multipolmagnetisierung, welcher den Kompensationsmagnet bildet bzw. dessen Funktionalität im Hinblick auf die Reduzierung oder Kompensierung des Streuvektorfelds bereitstellt.

Nachfolgend wird die vorliegende Erfindung beispielhaft unter Bezugnahme auf die beigefügten Figuren beschrieben. Es zeigen, jeweils schematisch,
- Fig. 1: ein Beispiel einer Vakuumpumpe im Querschnitt,
- Fig. 2: eine perspektivische Ansicht eines Kompensationsmagneten,
- Fig. 3: eine Querschnittsansicht eines Permanentmagnetlagers mit einem Kompensationsmagneten,
- Fig. 4: eine Querschnittsansicht eines abgewandelten Permanentmagnetlagers,
- Fig. 5: eine Querschnittsansicht eines weiteren Permanentmagnetlagers mit einem Kompensationsmagneten, und
- Fig. 6: eine Querschnittsansicht noch eines weiteren Permanentmagnetlagers mit einem Kompensationsmagneten, welcher in einem Abschnitt eines rotorseitigen magnetischen Hohlzylinders des Permanentmagnetlagers ausgebildet ist.

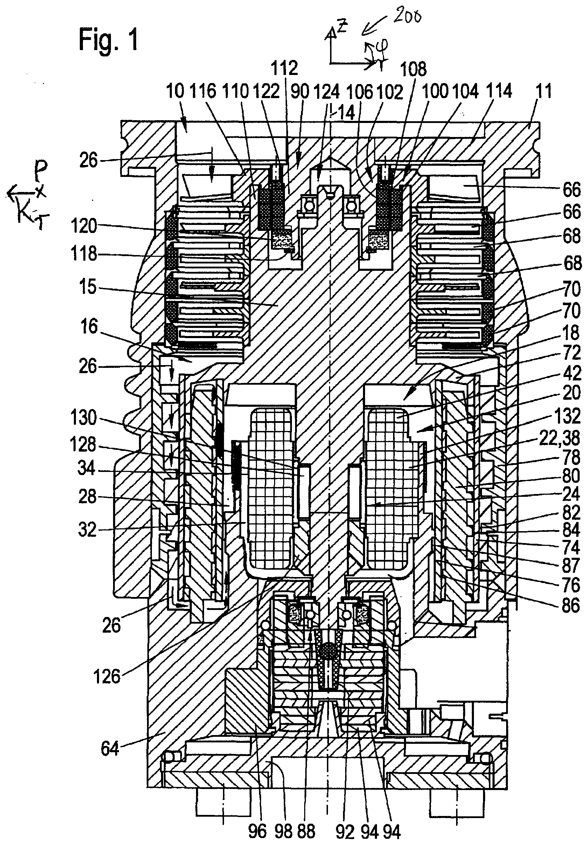

Die in Fig. 1 gezeigte Vakuumpumpe umfasst einen von einem Einlassflansch 11 umgebenen Pumpeneinlass 10 und einen nicht gezeigten Pumpenauslass sowie mehrere Prozessgaspumpstufen zur Förderung des an dem Pumpeneinlass 10 anstehenden Prozessgases zu dem Pumpenauslass. Die Vakuumpumpe umfasst ein Gehäuse 64 und einen in dem Gehäuse 64 angeordneten Rotor 16 mit einer um die Rotationsachse 14 drehbar gelagerten Rotorwelle 15.

Die Pumpe ist als Turbomolekularpumpe ausgebildet und umfasst mehrere pumpwirksam miteinander in Serie geschaltete turbomolekulare Pumpstufen mit mehreren an der Rotorwelle 15 befestigten radialen Rotorscheiben 66 und zwischen den Rotorscheiben 66 angeordneten und in dem Gehäuse 64 festgelegten Statorscheiben 68, wobei eine Rotorscheibe 66 und eine benachbarte Statorscheibe 68 jeweils eine turbomolekulare Pumpstufe bilden. Die Statorscheiben 68 sind durch Abstandsringe 70 in einem gewünschten axialen Abstand zueinander gehalten.

Die Vakuumpumpe umfasst außerdem vier in radialer Richtung ineinander angeordnete und pumpwirksam miteinander in Serie geschaltete Holweckpumpstufen. Der Rotor der Holweckpumpstufen umfasst eine mit der Rotorwelle 15 einteilig ausgebildete Rotornabe 72 und zwei an der Rotornabe 72 befestigte und von dieser getragene zylindermantelförmige Holweckrotorhülsen 74, 76, die koaxial zur Rotationsachse 14 orientiert und in radialer Richtung ineinander geschachtelt sind. Ferner sind zwei zylindermantelförmige Holweckstatorhülsen 78, 80 vorgesehen, die ebenfalls koaxial zu der Rotationsachse 14 orientiert und in radialer Richtung ineinander geschachtelt sind. Eine dritte Holweckstatorhülse ist durch einen Aufnahmeabschnitt 132 des Gehäuses 64 gebildet, der in der nachstehend beschriebenen Weise zur Aufnahme und Festlegung des Antriebsmotors 20 dient.

Die pumpaktiven Oberflächen der Holweckpumpstufen sind durch die Mantelflächen, d.h. die radialen Innen- und Außenflächen, der Holweckrotorhülsen 74, 76, der Holweckstatorhülsen 78, 80 und des Aufnahmeabschnitts 132 gebildet. Die radiale Innenfläche der äußeren Holweckstatorhülse 78 liegt der radialen Außenfläche der äußeren Holweckrotorhülse 74 unter Ausbildung eines radialen Holweckspalts 82 gegenüber und bildet mit dieser die erste Holweckpumpstufe. Die radiale Innenfläche der äußeren Holweckrotorhülse 74 steht der radialen Außenfläche der inneren Holweckstatorhülse 80 unter Ausbildung eines radialen Holweckspalts 84 gegenüber und bildet mit dieser die zweite Holweckpumpstufe. Die radiale Innenfläche der inneren Holweckstatorhülse 80 liegt der radialen Außenfläche der inneren Holweckrotorhülse 76 unter Ausbildung eines radialen Holweckspalts 86 gegenüber und bildet mit dieser die dritte Holweckpumpstufe. Die radiale Innenfläche der inneren Holweckrotorhülse 76 liegt der radialen Außenfläche des Aufnahmeabschnitts 132 unter Ausbildung eines radialen Holweckspalts 87 gegenüber und bildet mit dieser die vierte Holweckpumpstufe.

Die vorstehend genannten pumpaktiven Oberflächen der Holweckstatorhülsen 78, 80 und des Aufnahmeabschnitts 132 weisen jeweils mehrere spiralförmig um die Rotationsachse 14 herum in axialer Richtung verlaufende Holwecknuten auf, während die gegenüberliegenden Mantelflächen der Holweckrotorhülsen 74, 76 glatt ausgebildet sind und das Gas im Betrieb der Vakuumpumpe in den Holwecknuten vorantreiben.

Zur drehbaren Lagerung der Rotorwelle 15 sind ein Wälzlager 88 im Bereich des Pumpenauslasses und ein Permanentmagnetlager 90 im Bereich des Pumpeneinlasses 10 vorgesehen.

Im Bereich des Wälzlagers 88 ist an der Rotorwelle 15 eine konische Spritzmutter 92 mit einem zu dem Wälzlager 88 hin zunehmenden Außendurchmesser vorgesehen. Die Spritzmutter 92 steht mit zumindest einem Abstreifer eines Betriebsmittelspeichers in gleitendem Kontakt. Der Betriebsmittelspeicher umfasst mehrere aufeinander gestapelte saugfähige Scheiben 94, die mit einem Betriebsmittel für das Wälzlager 88, zum Beispiel mit einem Schmiermittel, getränkt sind. Im Betrieb der Vakuumpumpe wird das Betriebsmittel durch kapillare Wirkung von dem Betriebsmittelspeicher über den Abstreifer auf die rotierende Spritzmutter 92 übertragen und infolge der Zentrifugalkraft entlang der Spritzmutter 92 in Richtung des größer werdenden Außendurchmessers der Spritzmutter 92 zu dem Wälzlager 88 hin gefördert, wo es z.B. eine schmierende Funktion erfüllt. Das Wälzlager 88 und der Betriebsmittelspeicher sind durch einen wannenförmigen Einsatz 96 und ein Deckelelement 98 der Vakuumpumpe eingefasst.

Das Permanentmagnetlager umfasst eine rotorseitige Lagerhälfte 100 und eine statorseitige Lagerhälfte 102, welche jeweils einen Ringstapel aus mehreren in axialer Richtung aufeinander gestapelten permanentmagnetischen Ringen 104 bzw. 106 umfassen. Die Magnetringe 104, 106 liegen einander unter Ausbildung eines radialen Lagerspalts 108 gegenüber, wobei die rotorseitigen Magnetringe 104 radial außen und die statorseitigen Magnetringe 106 radial innen angeordnet sind. Das in dem Lagerspalt 108 vorhandene magnetische Feld ruft magnetische Abstoßungskräfte zwischen den Magnetringen 104, 106 hervor, welche eine radiale Lagerung der Rotorwelle 15 bewirken.

Die rotorseitigen Magnetringe 104 sind von einem Trägerabschnitt 110 der Rotorwelle getragen, welcher die Magnetringe 104 radial außenseitig umgibt. Die statorseitigen Magnetringe sind von einem statorseitigen Trägerabschnitt 112 getragen, welcher sich durch die Magnetringe 106 hindurch erstreckt und an radialen Streben 114 des Gehäuses 64 aufgehängt ist. Parallel zu der Rotationsachse 14 sind die rotorseitigen Magnetringe 104 in der einen Richtung durch ein mit dem Trägerabschnitt 110 gekoppeltes Deckelelement 116 und in der anderen Richtung durch einen radial vorstehenden Schulterabschnitt des Trägerabschnitts 110 festgelegt. Die statorseitigen Magnetringe 106 sind parallel zu der Rotationsachse 14 in der einen Richtung durch einen mit dem Trägerabschnitt 112 verbundenen Befestigungsring 118 und ein zwischen dem Befestigungsring 118 und den Magnetringen 106 angeordnetes Ausgleichselement 120 und in der anderen Richtung durch einen mit dem Trägerabschnitt 112 verbundenen Stützring 122 festgelegt.

Innerhalb des Magnetlagers ist ein Not- bzw. Fanglager 124 vorgesehen, welches im normalen Betrieb der Vakuumpumpe ohne Berührung leer läuft und erst bei einer übermäßigen radialen Auslenkung des Rotors 16 relativ zu den Stator in Eingriff gelangt, um einen radialen Anschlag für den Rotor 16 zu bilden, der eine Kollision der rotorseitigen Strukturen mit den statorseitigen Strukturen verhindert. Das Fanglager 124 ist als ungeschmiertes Wälzlager ausgebildet und bildet mit dem Rotor 16 und/oder dem Stator einen radialen Spalt, welcher bewirkt, dass das Fanglager 124 im normalen Pumpbetrieb außer Eingriff ist. Die radiale Auslenkung, bei der das Fanglager 124 in Eingriff gelangt, ist groß genug bemessen, so dass das Fanglager 124 im normalen Betrieb der Vakuumpumpe nicht in Eingriff gelangt, und gleichzeitig klein genug, so dass eine Kollision der rotorseitigen Strukturen mit den statorseitigen Strukturen unter allen Umständen verhindert wird.

Die Vakuumpumpe umfasst einen Antriebsmotor 20 zum drehenden Antreiben des Rotors 16. Der Antriebsmotor 20 umfasst einen Motorstator 22 mit einem Kern 38 und mit ein oder mehreren in Fig. 1 nur schematisch dargestellten Spulen 42, die in an der radialen Innenseite des Kerns 38 vorgesehenen Nuten des Kerns 38 festgelegt sind.

Der Anker des Antriebsmotors 20 ist durch den Rotor 16 gebildet, dessen Rotorwelle 15 sich durch den Motorstator 22 hindurch erstreckt. Auf dem sich durch den Motorstator 22 hindurch erstreckenden Abschnitt der Rotorwelle 15 ist radial außenseitig eine Permanentmagnetanordnung 128 festgelegt. Zwischen dem Motorstator 22 und dem sich durch den Motorstator 22 hindurch erstreckenden Abschnitt des Rotors 16 ist ein Zwischenraum 24 angeordnet, welcher einen radialen Motorspalt umfasst, über den sich der Motorstator 22 und die Permanentmagnetanordnung 128 zur Übertragung des Antriebsmoments magnetisch beeinflussen.

Die Permanentmagnetanordnung 128 ist in axialer Richtung durch eine auf die Rotorwelle 15 aufgesteckte Befestigungshülse 126 an der Rotorwelle 15 fixiert.

Eine Kapselung 130 umgibt die Permanentmagnetanordnung 128 an deren radialer Außenseite und dichtet diese gegenüber dem Zwischenraum 24 ab.

Der Motorstator 22 ist in dem Gehäuse 64 durch einen gehäusefesten Aufnahmeabschnitt 132 festgelegt, welcher den Motorstator 22 radial außenseitig umgibt und den Motorstator 22 in radialer und axialer Richtung abstützt. Der Aufnahmeabschnitt 132 begrenzt gemeinsam mit der Rotornabe 72 einen Motorraum 18, in dem der Antriebsmotor 20 aufgenommen ist.

Der Motorraum 18 weist einen auf der einen Seite des Zwischenraums 24 angeordneten und mit der innenliegenden, vierten Holweckpumpstufe gasleitend verbundenen Einlass 28 und einen auf der gegenüberliegenden Seite des Zwischenraums 24 angeordneten und mit dem Pumpenauslass gasleitend verbundenen Auslass auf.

Der Kern 38 des Motorstators 22 weist an seiner radialen Außenseite in dem in Fig. 1 links gezeigten Bereich eine Aussparung 34 auf, die gemeinsam mit dem benachbarten Bereich des Aufnahmeabschnitts 132 einen Kanal 32 bildet, durch den das in den Motorraum 18 geförderte Prozessgas an dem Zwischenraum 24 vorbei von dem Einlass 28 zu dem Auslass förderbar ist.

Der Gasweg, auf dem das Prozessgas von dem Pumpeneinlass 10 zu dem Pumpenauslass gelangt, ist in Fig. 1 durch Pfeile 26 veranschaulicht. Das Prozessgas wird ausgehend von dem Pumpeneinlass 10 zuerst der Reihe nach durch die turbomolekularen Pumpstufen und anschließend der Reihe nach durch die vier Holweckpumpstufen gefördert. Das aus der vierten Holweckpumpstufe austretende Gas gelangt in den Motorraum 18 und wird von dem Einlass 28 des Motorraums 18 durch den Kanal 32 hindurch zu dem nicht gezeigten Auslass des Motorraums 18 und dem nicht gezeigten Pumpenauslass gefördert.

Bei der Vakuumpumpe der Fig. 1 kann das Permanentmagnetlager 90 ein magnetisches Streuvektorfeld außerhalb der Vakuumpumpe erzeugen, welches insbesondere von einer naturgemäß mangelnden Perfektion der permanentmagnetischen Eigenschaften der das Lager 90 bildenden Magnetringe 104, 106 herrührt. Das magnetische Streuvektorfeld kann bei manchen Anwendungen unerwünscht sein und/oder sich störend auf einen durchzuführenden Prozess oder eine Messung auswirken.

Für die Vakuumpumpe der Fig. 1 kann ein Zylinderkoordinatensystem 200 aufgespannt werden mit einer längs der Rotationsachse 14 verlaufenden z-Achse, einer nach rechts und senkrecht zur z-Achse verlaufenden Pol-Achse (r-Achse), zu der in an sich bekannter Weise eine Polar- bzw. azimutale Koordinate ϕ, mit der nachstehend auch die Winkelstellung des Rotors 16 angegeben wird, definiert ist. Der Ursprung des Koordinatensystems in Bezug auf die z-Achse kann prinzipiell in beliebiger Höhe längs der Rotationsachse 14 liegen, z.B. wie eingezeichnet etwas oberhalb des Einlasses 10.

Zur Reduzierung oder bevorzugt zur Kompensation des magnetischen Streuvektorfelds wird in einem Referenzpunkt P außerhalb der Vakuumpumpe wenigstens eine Komponente, wie etwa die radiale Komponente Kᵣ, des Streuvektorfelds gemessen, etwa mit einem Magnetfeldmessgerät. Der Referenzpunkt P kann beliebig gewählt sein. Vorzugsweise wird der Referenzpunkt P so gewählt, dass er in einer Anwendung einer Stelle entspricht, an der sich das magnetische Streufeld der Vakuumpumpe störend auswirken würde.

Es wird insbesondere der Betrag der Komponente Kᵣ gemessen, wobei z.B. eine nach außen gerichtete radiale Komponente Kᵣ mit einem positiven Vorzeichen und eine nach innen gerichtete radiale Komponente Kᵣ mit negativem Vorzeichen versehen wird.

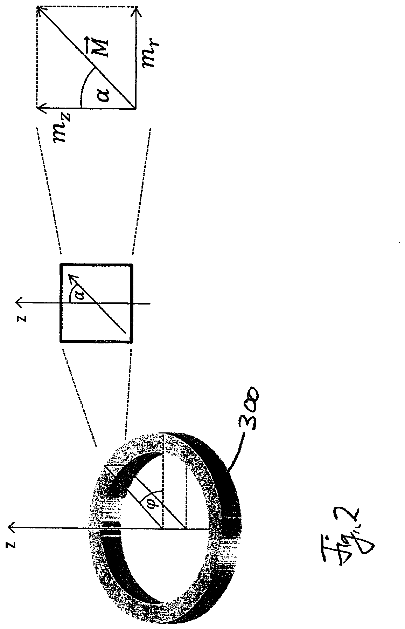

Anschließend wird das Magnetfeld M eines in Fig. 2 gezeigten Kompensationsmagneten 300, der in Fig. 1 nicht gezeigt ist, derart dauerhaft verändert, dass dieses die gemessene Komponente Kᵣ reduziert oder bevorzugt kompensiert. Es ist insbesondere vorgesehen, dass die Messung der Komponente Kᵣ bei sich drehender Vakuumpumpe durchgeführt wird. Es kann somit am Referenzpunkt P eine Funktion für die Komponente Kᵣ(ϕ) bestimmt werden, die den vorzeichenbehafteten Betrag der Komponente in Abhängigkeit von der Winkelstellung des Rotors 16, also in Abhängigkeit des azimutalen Winkels ϕ, über wenigstens einen vollständigen Umlauf des Rotors 16 um die Rotationsachse 14, also für ϕ von 0 Grad bis 360 Grad, angibt. Die Funktion Kᵣ(ϕ) kann dabei eine kontinuierliche Funktion oder eine punktuelle Funktion sein, bei der Funktionswerte nur für manche Winkelstellungen gemessen werden. Die Funktion Kᵣ(ϕ) spiegelt somit den Verlauf der Komponente (nach Betrag und Richtung) in Abhängigkeit von der Winkelstellung des Rotors 16 wieder.

Das Magnetfeld M des Kompensationsmagneten 300 weist an jeder Stelle außerhalb des Magneten 300 eine radiale Komponente mᵣ, eine axiale Komponente m_{z} und eine azimutale Komponente auf. Wenn die azimutale Komponente vernachlässigt wird, entspricht das Magnetfeld M an einer Stelle außerhalb des Magneten 300 der Vektorsumme der radialen Komponente mᵣ und der axialen Komponente m_{z} an der Stelle, wie in Fig. 2 beispielhaft gezeigt ist. Der in Fig. 2 eingezeichnete Winkel α beschreibt an der Stelle die lokale Winkelverkippung bzw. die Schiefstellung des Magnetisierungsvektors M in Bezug auf die z-Achse.

Bei dem Kompensationsmagnet 300 wird in Abhängigkeit des azimutalen Winkels ϕ das Magnetfeld M verändert, und zwar idealerweise so, dass, wenn der Kompensationsmagnet 300 in seiner vorgesehenen Einbaulage in die Vakuumpumpe eingebaut ist, dessen radiale Komponente mᵣ(ϕ) am Referenzpunkt zumindest im Wesentlichen betragsmäßig gleich und richtungsmäßig der Komponente Kᵣ(ϕ) entgegengesetzt ist: mᵣ(ϕ) ≈ - Kᵣ(ϕ) für ϕ von 0 bis 360 Grad. Durch das veränderte Magnetfeld M(ϕ) des Kompensationsmagneten 300 kann somit die Komponente Kᵣ(ϕ) am Referenzpunkt bei zumindest im Wesentlichen allen Winkelstellungen des Rotors 16 kompensiert werden.

Die Funktion Kᵣ(ϕ), die das zu reduzierende bzw. zu kompensierende Streumagnetfeld des Permanentmagnetlagers 90 betrifft, kann direkt an der Vakuumpumpe oder alternativ an einem entsprechend ausgebildeten Teststand gemessen werden. Vorteilhaft an einer direkten Messung an der Vakuumpumpe ist, dass dabei auch die Beiträge der Permanentmagnetanordnung 128 des Antriebsmotors 20 oder anderer Bauteile der Vakuumpumpe zum Streumagnetfeld mitgemessen werden können. Die Funktion Kᵣ(ϕ) kann somit diese Anteile umfassen, die durch das veränderte Magnetfeld M(ϕ) des Kompensationsmagneten 300 ebenfalls reduziert bzw. kompensiert werden.

Messergebnisse zeigen außerdem, dass bei einer zumindest annähernden Kompensierung der Komponenten Kᵣ(ϕ) am Referenzpunkt P die Komponente des Streuvektorfelds außerhalb der Vakuumpumpe auch an anderen Stellen als dem Referenzpunkt P vermindert oder eventuell sogar kompensiert wird.

Entsprechend den vorstehenden Ausführungen kann der Kompensationsmagnet 300 zuerst bearbeitet werden. Nachdem sein Magnetfeld in der vorgesehenen Weise verändert wurde, kann der Kompensationsmagnet 300 in die Vakuumpumpe eingebaut werden (in Fig. 1 nicht gezeigt). Wie Fig. 2 zeigt, ist der Kompensationsmagnet 300 vorzugsweise als Ringmagnet ausgebildet.

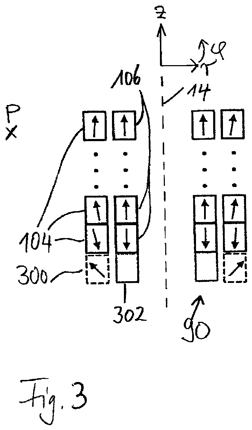

Das Permanentmagnetlager 90 der Vakuumpumpe der Fig. 1 kann - wie in Fig. 3 gezeigt ist - abgewandelt werden. Dabei kann der Kompensationsmagnet 300 mit dem entsprechend den vorstehenden Ausführungen veränderten Magnetfeld als zusätzlicher Magnet unterhalb der Magnetringe 104 des Permanentlagers 90 auf Seiten des Rotors 16 angeordnet sein. Der Kompensationsmagnet 300 kann auch im mittigen Bereich oder im oberen Bereich des Lagers 90 vorgesehen sein. Der Kompensationsmagnet 300 kann somit zwischen den Magnetringen 104 oder oberhalb der Magnetringe 104 angeordnet sein. Statorseitig kann außerdem unterhalb der Magnetringe 106 des Permanentlagers 90 und radial innerhalb des Kompensationsmagneten 300 ein nicht magnetischer Platzhaltering 302 angeordnet sein. Durch die Verwendung des Kompensationsmagneten 300 als zusätzlicher Magnet in dem Permanentmagnetlager 90 kann bei der Vakuumpumpe die radiale Komponente des Streuvektorfelds, insbesondere im gemessenen Referenzpunkt, bei sich drehendem Rotor 16 verringert bzw. im Idealfall zumindest annähernd kompensiert werden. Dadurch kann die Vakuumpumpe auch für Anwendungen genutzt werden, die ein geringes magnetisches Streufeld voraussetzen. Ein weiterer Magnetring kann zur Verringerung der axialen Streuvektorfeldkomponenten eingesetzt werden. Außerdem kann noch ein weiterer Magnetring zur Verringerung der azimutalen Streuvektorfeldkomponenten eingesetzt werden.

In die Rechtecke, die in Fig. 3 die einzelnen Ringmagnete 300, 104 und 106 symbolisieren, wurden Pfeile eingezeichnet, die für jeden Ringmagnet beispielhaft dessen Magnetisierungsrichtung anzeigen.

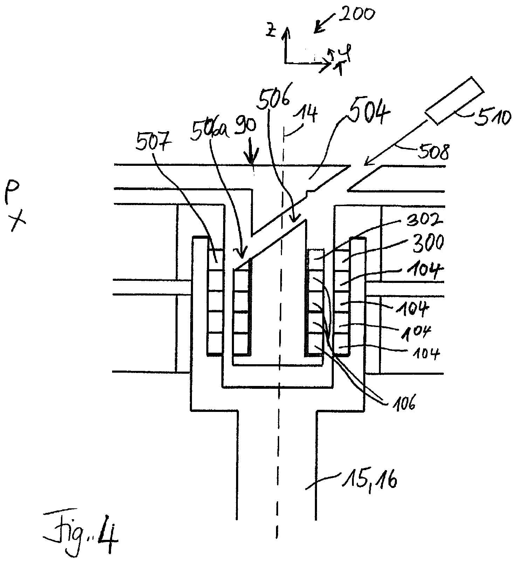

Bei der Vakuumpumpe der Fig. 1 kann der Bereich des Permanentmagnetlagers 90 - wie in Fig. 4 gezeigt ist - abgewandelt sein. Der Kompensationsmagnet 300 ist als axial außen liegender Ringmagnet oberhalb der Magnetringe 104 rotorseitig angeordnet. Radial innerhalb des Kompensationsmagneten 300 ist statorseitig der Platzhaltering 302 angeordnet. Außerdem ist in einem statorseitigen Gehäuseteil 504 des Permanentmagnetlagers 90 ein zylindrischer Kanal 506 ausgebildet. Der hinter dem Ausgang 506a des Kanals 506 liegende Bereich 507 des Kompensationsmagneten 300 kann mit von einem Laser 510 stammender und durch den Kanal 506 geleiteter Laserstrahlung 508 beaufschlagt werden.

Bei dem Laser 510 kann es sich um einen Hochleistungslaser handeln, dessen Laserstrahlung 508 ausreicht, um den Bereich 507 lokal auf eine Temperatur zu erwärmen, bei der der Bereich in Abhängigkeit von der Dauer der Einstrahlung seine Magnetisierung wenigstens teilweise verliert. Durch Beaufschlagung des Bereichs 507 mit Laserstrahlung 508 kann das Magnetfeld des Kompensationsmagneten 300 dauerhaft verändert werden. Durch Drehen des Rotors 16 um seine Rotationsachse 14 ändert sich in Abhängigkeit von der Winkelstellung des Rotors 16 der Bereich 507, der der Laserstrahlung ausgesetzt werden kann.

Bevorzugt ist vorgesehen, dass eine Funktion wenigstens einer Komponente, z.B. der radialen Komponente Kᵣ(ϕ) des Streumagnetfelds des Permanentmagnetlagers 90, einschließlich des Kompensationsmagneten 300, an einem Referenzpunkt P in Abhängigkeit von der Winkelstellung des Rotors 16, also in Abhängigkeit des azimutalen Winkels ϕ bestimmt wird. Eine Funktion des Magnetfelds M(ϕ) oder zumindest eine Funktion der radialen Komponente mᵣ(ϕ) des Magnetfelds M(ϕ) in Abhängigkeit des azimutalen Winkels ϕ kann außerdem für den Kompensationsmagneten 300 vor dem Einbau in das Lager 90 bestimmt worden sein.

Anhand der Funktionen Kᵣ(ϕ) und M(ϕ) kann eine Bearbeitungsfunktion zur Steuerung des Lasers 510 zur Bearbeitung des Kompensationsmagneten bestimmt werden. Anhand der Funktionen Kᵣ(ϕ) und M(ϕ) und aus empirisch gewonnenen Daten können zum Beispiel Parameter errechnet werden, die angeben, mit welcher Leistung und Dauer der Strahl 508 auf einen bei einer bestimmten Winkelstellung ϕ hinter dem Kanalausgang 506a liegenden Bereich 507 eingestellt werden muss, damit das Magnetfeld M(ϕ) so geändert wird, dass dessen radiale Komponente mᵣ(ϕ) zumindest annähernd eine Kompensation der radialen Komponente Kᵣ(ϕ) bewirkt.

Der Kompensationsmagnet 300 kann bei der Variante gemäß Fig. 4 in seiner Einbauposition zur Veränderung des Magnetfelds bearbeitet werden. Alternativ oder ergänzend kann der Kompensationsmagnet 300 auch außerhalb des Lagers 90 bearbeitet werden, um dessen Magnetfeld in einer gewünschten Weise zu verändern. Insbesondere kann die Form des Magneten 300 durch Materialentfernung verändert werden.

Bei den vorstehend beschriebenen Beispielen wurde als Kompensationsmagnet 300 ein zusätzlicher Ringmagnet zu den Ringmagneten 104, 106 des Permanentmagnetlagers 90 hinzugefügt. Bevorzugt ist vorgesehen, dass zur Reduzierung bzw. Kompensation jeder Komponente des Streuvektormagnetfelds wenigstens ein zusätzlicher Kompensationsmagnet 300 verwendet wird. Zur Reduzierung bzw. Kompensation der radialen Komponente des Streuvektormagnetfelds wird somit ein anderer Kompensationsmagnet verwenden als zur Reduzierung bzw. Kompensation der axialen Komponente des Streuvektormagnetfelds.

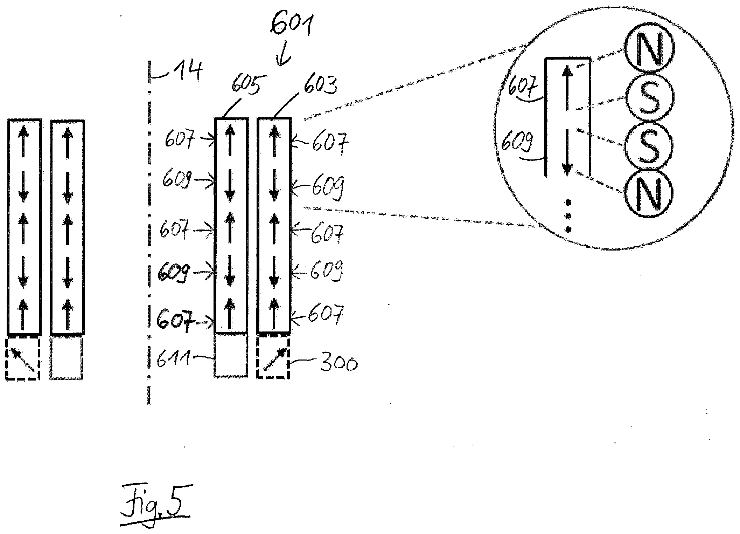

Fig. 5 zeigt eine Querschnittsansicht eines weiteren Permanentmagnetlagers 601, das einen rotorseitigen magnetischen Hohlzylinder 603 und einen statorseitigen magnetischen Hohlzylinder 605 aufweist. Jeder Hohlzylinder 603, 605 weist eine Multipolmagnetisierung auf. Das heißt, dass jeder Hohlzylinder 603, 605 mehrere in axialer Richtung, bezogen auf die Rotationsachse 14, aufeinanderfolgende Abschnitte 607, 609 derart aufweist, dass zueinander benachbarte Abschnitte 607, 609 eine zumindest im Wesentlichen entgegengesetzte Magnetpolorientierung aufweisen. Die Magnetisierungsrichtungen verlaufen in benachbarten Abschnitten 607, 609 somit wenigstens annähernd in entgegengesetzten Richtungen.

Wie durch die Pfeile in Fig. 5 dargestellt ist, können zum Beispiel die Abschnitte 607 eine jeweilige Magnetpolorientierung aufweisen, die sich in einer Richtung längs der Rotationsachse 14 erstreckt, während die Abschnitte 609 eine jeweilige Magnetpolorientierung aufweisen, die sich in der entgegengesetzten Richtung längs der Rotationsachse 14 erstreckt.

Wie in dem vergrößerten Ausschnitt in Fig. 5 dargestellt ist, sollen die Pfeile vom Südpol S zum Nordpol N verlaufen, wobei die Pfeilspitze in Richtung des Nordpols N zeigt. Mit dem Begriff Magnetpolorientierung wird daher auf die Orientierung bzw. die Lage des magnetischen Nordpols N bzw. des magnetischen Südpols S in dem jeweiligen Abschnitt 607, 609 des magnetischen Hohlzylinders 603, 605 abgestellt. Die Magnetpolorientierung kann daher als Richtung definiert werden, in der sich ausgehend vom magnetischen Südpol S eine gerade Linie zum magnetischen Nordpol N erstreckt.

Das in Fig. 5 dargestellte Magnetlager 601 kann in einer Vakuumpumpe, wie sie zum Beispiel in Fig. 1 dargestellt ist, eingesetzt werden. Der rotorseitige Hohlzylinder 603 kann dabei als Ersatz zumindest eines Teils der rotorseitigen Magnetringe 104 eingesetzt werden. Dementsprechend kann der statorseitige Hohlzylinder 605 ebenfalls als Ersatz zumindest eines Teils der statorseitigen Magnetringe 106 eingesetzt werden. Der statorseitige Hohlzylinder 605 ist dabei - wie in Fig. 5 gezeigt ist - in der Vakuumpumpe innerhalb des rotorseitigen Hohlzylinders 603 und koaxial zu diesem angeordnet.

Bei einer nicht dargestellten Variante kann das Magnetlager 601 nur statorseitig oder rotorseitig einen magnetischen Hohlzylinder 603, 605 aufweisen, während auf der Seite ohne Hohlzylinder herkömmliche Magnetringe zum Einsatz kommen.

Wie Fig. 5 außerdem zeigt, ist rotorseitig an einem axialen Ende des Hohlzylinders 603 ein Kompensationsmagnet 300 angeordnet, der - wie vorstehend beschrieben wurde - zur Reduzierung bzw. vorzugsweise zur Kompensierung von wenigstens einer Komponente des Streuvektorfelds an wenigstens einem Referenzpunkt ausgestaltet ist. Statorseitig kann radial innerhalb des Kompensationsmagnets 300 ein nichtmagnetischer Ring 611 als Platzhalter angeordnet sein.

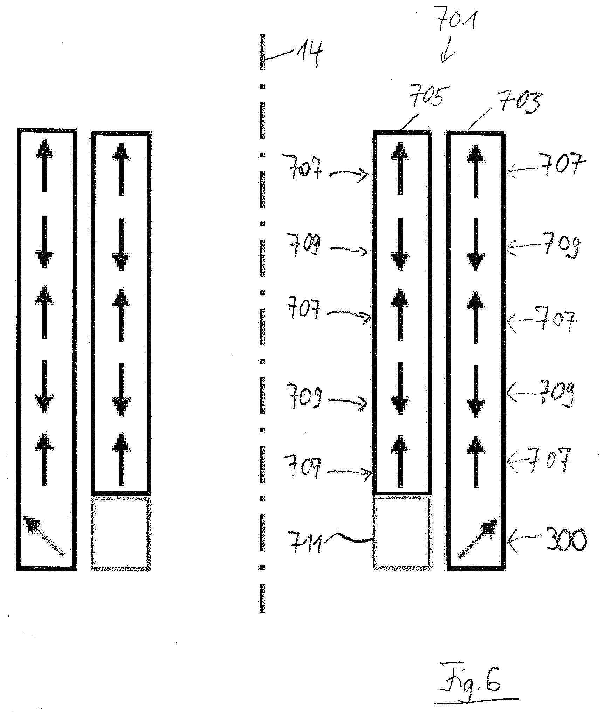

Fig. 6 zeigt eine Querschnittsansicht noch eines weiteren Permanentmagnetlagers 701, das einen rotorseitigen magnetischen Hohlzylinder 703 und einen statorseitigen magnetischen Hohlzylinder 705 aufweist. Jeder Hohlzylinder 703, 705 weist mehrere in axialer Richtung, bezogen auf die Rotationsachse 14, aufeinanderfolgende Abschnitte 707, 709 derart auf, dass zueinander benachbarte Abschnitte 707, 709 eine zumindest im Wesentlichen entgegengesetzte Magnetpolorientierung aufweisen.

Im Unterschied zu der Variante der Fig. 5 ist bei der Variante der Fig. 6 der Kompensationsmagnet 300 nicht als separater Magnetring ausgestaltet, sondern in den rotorseitigen Hohlzylinder 703 integriert. Der an einem axialen Ende des rotorseitigen Hohlzylinders 703 liegende Abschnitt ist so magnetisiert, dass dieser den Kompensationsmagneten 300 bildet bzw. dessen Funktion übernimmt.
Der radial innen liegende Abschnitt 711 des statorseitigen Hohlzylinders 705 kann nicht magnetisiert sein. Alternativ kann dieser Bereich von einem nichtmagnetischen Ring als Platzhalter ausgefüllt werden (nicht dargestellt).

### Bezugszeichenliste

- 10: Pumpeneinlass
- 11: Einlassflansch
- 14: Rotationsachse
- 15: Rotorwelle
- 16: Rotor
- 18: Motorraum
- 20: Antriebsmotor
- 22: Motorstator
- 24: Zwischenraum
- 26: Pfeile, Gasweg
- 28: Einlass
- 32: Kanal
- 34: Aussparung
- 38: Kern
- 42: Spule
- 64: Gehäuse
- 66: Rotorscheibe
- 68: Statorscheibe
- 70: Abstandsring
- 72: Rotornabe
- 74, 76: Holweckrotorhülse
- 78, 80: Holweckstatorhülse
- 82, 84, 86, 87: Holweckspalt
- 88: Wälzlager
- 90: Permanentmagnetlager
- 92: Spritzmutter
- 94: saugfähige Scheibe
- 96: wannenförmiger Einsatz
- 98: Deckelelement
- 100: rotorseitige Lagerhälfte
- 102: statorseitige Lagerhälfte
- 104, 106: Magnetring
- 108: Lagerspalt
- 110, 112: Trägerabschnitt
- 114: Strebe
- 116: Deckelelement
- 118: Befestigungsring
- 120: Ausgleichselement
- 122: Stützring
- 124: Fanglager
- 126: Befestigungshülse
- 128: Permanentmagnetanordnung
- 130: Kapselung
- 132: Aufnahmeabschnitt
- 200: Koordinatensystem
- 300: Kompensationsmagnet
- 302: Platzhalterring
- 504: statorseitiges Gehäuseteil
- 506: Zugangskanal
- 506a: Kanalausgang
- 507: Bereich
- 508: Laserstrahlung
- 510: Laser
- 601, 701: Permanentmagnetlager
- 603, 703: Hohlzylinder
- 605, 705: Hohlzylinder
- 607, 707: Abschnitt
- 609, 709: Abschnitt
- 611: Ring
- 711: Abschnitt
- P: Referenzpunkt
- Kᵣ: Komponente
- M: Magnetfeld
- mᵣ: radiale Komponente
- m_{z}: axiale Komponente
- ϕ: azimutaler Winkel
- α: Winkelverkippung

## Patentansprüche

1. Verfahren zum Reduzieren eines magnetischen Streuvektorfelds einer Vakuumpumpe, insbesondere einer Turbomolekularpumpe, oder einer Rotationseinheit für eine Vakuumpumpe, insbesondere für eine Turbomolekularpumpe, wobei das magnetische Streuvektorfeld zumindest teilweise von wenigstens einem Permanentmagnetlager (90, 601, 701) erzeugt wird, welches zur gegenseitigen drehbaren Lagerung eines Rotors (16) und eines Stators der Vakuumpumpe oder der Rotationseinheit ausgebildet ist und aus mehreren Paaren von Ringmagneten (104, 106) gebildet wird, wobei jeweils ein Ringmagnet (106) eines Paars auf dem Stator und der andere Ringmagnet (104) des Paars auf dem Rotor (16) angeordnet ist, wobei
- wenigstens eine Komponente (Kᵣ) des Streuvektorfelds an wenigstens einem Referenzpunkt (P) bestimmt wird, und
- das Magnetfeld (M) eines Kompensationsmagneten (300) derart ausgewählt oder dauerhaft verändert wird, dass dieses die Komponente (Kᵣ) des Streuvektorfelds wenigstens am Referenzpunkt (P) reduziert oder bevorzugt kompensiert;
**dadurch gekennzeichnet, dass**
es sich bei dem Kompensationsmagneten (300) um einen zusätzlich zu den Ringmagnetpaaren (104, 106) des Permanentmagnetlagers (90) vorgesehenen Permanentmagneten handelt.

2. Verfahren nach Anspruch 1,
**dadurch gekennzeichnet, dass**
am Referenzpunkt (P) eine Funktion der Komponente (Kᵣ) des Streuvektorfelds bei sich um eine Rotationsachse (14) drehendem rotorseitigen Teil des Permanentmagnetlagers (90, 601, 701) in Abhängigkeit von der Winkelstellung des rotorseitigen Teils des Permanentmagnetlagers (90, 601, 701) für wenigstens einen vollständigen Umlauf des rotorseitigen Teils des Permanentlagers (90, 601, 701) um die Rotationsachse (14) gemessen wird, und
dass das Magnetfeld (M) des Kompensationsmagneten (300) derart ausgewählt oder verändert wird, dass es, insbesondere in einer für den
Kompensationsmagneten vorgesehenen Einbauposition, unabhängig von der Winkelstellung des rotorseitigen Teils des Permanentlagers (90, 601, 701) die am Referenzpunkt messbare Komponente (Kᵣ) des Streuvektorfelds reduziert oder zumindest annähernd kompensiert, und/oder
dass es, insbesondere in einer für den Kompensationsmagneten vorgesehenen Einbauposition, unabhängig von der Winkelstellung des rotorseitigen Teils des Permanentlagers (90, 601, 701) wenigstens die am Referenzpunkt (P) messbaren zeitlich veränderlichen Anteile der Komponente (Kᵣ) reduziert oder bevorzugt kompensiert.

3. Verfahren nach Anspruch 1 oder 2,
**dadurch gekennzeichnet, dass**
für jede Streuvektorfeldkomponente jeweils wenigstens ein Kompensationsmagnet (300) zur Reduktion und bevorzugt zur Kompensation der Stärke dieser Streuvektorfeldkomponente verwendet wird.

4. Verfahren nach einem der Ansprüche 1 bis 3,
**dadurch gekennzeichnet, dass**
der Kompensationsmagnet (300) als Ringmagnet ausgebildet und/oder am Rotor (16) angeordnet ist.

5. Verfahren nach einem der vorhergehenden Ansprüche,
**dadurch gekennzeichnet, dass**
das Permanentmagnetlager (601, 701) wenigstens einen magnetischen Hohlzylinder (603, 605, 703, 705) umfasst, der zwei oder mehr in axialer Richtung aufeinanderfolgende Abschnitte (607, 609, 707, 709) aufweist, wobei zueinander benachbarte Abschnitte (607, 609, 707, 709) eine zumindest im Wesentlichen entgegengesetzte Magnetpolorientierung aufweisen, und wobei der Kompensationsmagnet (300) von einem zu dem Hohlzylinder (603, 605, 703, 705) separaten Ringmagnet gebildet wird oder in einem Abschnitt des Hohlzylinders (603, 605, 703, 705) ausgebildet ist bzw. ausgebildet wird.

6. Verfahren nach einem der vorhergehenden Ansprüche,
**dadurch gekennzeichnet, dass**
das Magnetfeld (M) des Kompensationsmagneten (300) verändert wird durch lokales Verändern der Form, insbesondere durch lokales Entfernen von Material, und/oder durch lokales Verändern der materialspezifischen permanentmagnetischen Eigenschaften, insbesondere durch wenigstens teilweises lokales Entmagnetisieren.

7. Verfahren nach einem der Ansprüche 2 bis 6,
**dadurch gekennzeichnet, dass**
anhand der gemessenen Funktion der Komponente (Kᵣ) des Streuvektorfeldes in Abhängigkeit der Winkelstellung des rotorseitigen Teils des Permanentmagnetlagers (90. 601, 701) eine Bearbeitungsfunktion zur Steuerung einer Bearbeitungseinrichtung, insbesondere mit wenigstens einem Laser (510), bestimmt wird, dass in der Bearbeitungsfunktion spezifiziert ist, wie die Form des Kompensationsmagneten (300) und/oder dessen materialspezifische permanentmagnetische Eigenschaften zu verändern sind, und dass die Bearbeitungseinrichtung anhand der Bearbeitungsfunktion gesteuert wird, um die Form und/oder materialspezifischen permanentmagnetischen Eigenschaften des Kompensationsmagnets (300) zu bearbeiten.

8. Verfahren nach einem der vorhergehenden Ansprüche,
**dadurch gekennzeichnet, dass**
als Kompensationsmagnet (300) ein Permanentmagnet, insbesondere Ringmagnet, bereitgestellt wird, der eine deutliche Magnetisierung in der zu reduzierenden bzw. zu kompensierenden Streuvektorfeldkomponente (Kᵣ) aufweist.

9. Verfahren nach einem der vorhergehenden Ansprüche,
**dadurch gekennzeichnet, dass**
der Kompensationsmagnet (300) in seiner Einbauposition bearbeitet oder zuerst bearbeitet und nach der Bearbeitung in seiner Einbauposition in der Vakuumpumpe oder der Rotationseinheit angeordnet wird.

10. Vakuumpumpe, insbesondere Turbomolekularpumpe, oder Rotationseinheit für eine Vakuumpumpe, insbesondere für eine Turbomolekularpumpe, erhalten durch ein Verfahren nach einem der vorhergehenden Ansprüche.

11. Vakuumpumpe, insbesondere Turbomolekularpumpe, oder Rotationseinheit für eine Vakuumpumpe, insbesondere für eine Turbomolekularpumpe, welche einen Rotor (16) und einen Stator und ein Permanentmagnetlager (90, 601, 701) umfasst, das zur gegenseitigen drehbaren Lagerung des Rotors (16) und des Stators ausgebildet ist und aus mehreren Paaren von Ringmagneten (104, 106) gebildet ist, wobei jeweils ein Ringmagnet (106) eines Paars auf dem Stator und der andere Ringmagnet (104) des Paars auf dem Rotor (16) angeordnet ist,
wobei das Magnetfeld (M) eines Kompensationsmagneten (300) derart ausgebildet oder verändert ist, dass es wenigstens eine Komponente (Kᵣ) des magnetischen Streuvektorfeld des Permanentmagnetlagers (90, 601, 701) an einem Referenzpunkt (P) außerhalb der Vakuumpumpe oder der Rotationseinheit reduziert und bevorzugt kompensiert;
**dadurch gekennzeichnet, dass**
es sich bei dem Kompensationsmagneten (300) um einen zusätzlich zu den Ringmagnetpaaren (104, 106) des Permanentmagnetlagers (90) vorgesehenen Permanentmagneten handelt.

12. Vakuumpumpe nach Anspruch 10 oder 11,
**dadurch gekennzeichnet, dass**
in der Vakuumpumpe oder der Rotationseinheit, insbesondere in einem Gehäuseteil (504) des Permanentmagnetlagers, wenigstens ein Zugangskanal (506) zu dem in seiner vorgesehenen Einbauposition angeordneten Kompensationsmagneten (300) ausgebildet ist, um den Kompensationsmagneten (300) lokal mit Laserlicht zu beaufschlagen.

13. Vakuumpumpe nach einem der Ansprüche 10 bis 12,
**dadurch gekennzeichnet, dass**
der Kompensationsmagnet (300) an einem axialen Ende des Rotors (16), insbesondere oberhalb eines rotorseitigen permanentmagnetischen Ringstapels des Magnetlagers (90), angeordnet ist, und/oder das Permanentmagnetlager (601, 701) wenigstens einen magnetischen Hohlzylinder (603, 605, 703, 705) umfasst, der zwei oder mehr in axialer Richtung aufeinanderfolgende Abschnitte (607, 609, 707, 709) aufweist, wobei zueinander benachbarte Abschnitte (607, 609, 707, 709) eine zumindest im Wesentlichen entgegengesetzte Magnetpolorientierung aufweisen, und wobei der Kompensationsmagnet (300) von einem zu dem Hohlzylinder (603, 605, 703, 705) separaten Ringmagnet gebildet wird oder in einem Abschnitt des Hohlzylinders (603, 605, 703, 705), der bevorzugt an einem axialen Ende des Hohlzylinders (603, 605, 703, 705) liegt, ausgebildet ist.

## Claims

1. A method of reducing a magnetic scattering vector field of a vacuum pump, in particular of a turbomolecular pump, or of a rotation unit for a vacuum pump, in particular for a turbomolecular pump, wherein the magnetic scattering vector field is at least partly generated by at least one permanent magnet bearing (90, 601, 701) which is configured for the mutual rotatable support of a rotor (16) and a stator of the vacuum pump or of the rotation unit and which is formed from a plurality of pairs of ring magnets (104, 106); wherein a respective one ring magnet (106) of a pair is arranged at the stator and the other ring magnet (104) of the pair is arranged at the rotor (16); and wherein
- at least one component (Kᵣ) of the scattering vector field is determined at at least one reference point (P) and
- the magnetic field (M) of a compensation magnet (300) is selected or permanently changed such that it reduces or preferably compensates the component (Kᵣ) of the scattering vector field at least at the reference point (P),
**characterized in that**
the compensation magnet (300) is a permanent magnet provided in addition to the ring magnet pairs (104, 106) of the permanent magnet bearing (90).

2. A method in accordance with claim 1,
**characterized in that**,
when a rotor-side part of the permanent magnet bearing (90, 601, 701) rotates about an axis of rotation (14), a function of the component (Kᵣ) of the scattering vector field is measured at the reference point (P) for at least one complete revolution of the rotor-side part of the permanent magnet bearing (90, 601, 701) about the axis of rotation (14) in dependence on the angular position of the rotor-side part of the permanent magnet bearing (90, 601, 701); and
**in that** the magnetic field (M) of the compensation magnet (300) is selected or changed such that, in particular in an installation position provided for the compensation magnet, it reduces or at least approximately compensates the component (Kᵣ) of the scattering vector field measurable at the reference point independently of the angular position of the rotor-side part of the permanent bearing (90, 601, 701) and/or
such that, in particular in an installation position provided for the compensation magnet, it at least reduces or preferably compensates the portions of the component (Kᵣ) variable in time and measurable at the reference point (P) independently of the angular position of the rotor-side part of the permanent bearing (90, 601, 701).

3. A method in accordance with claim 1 or claim 2,
**characterized in that**,
for each scattering vector field component, at least one respective compensation magnet (300) is used for reducing and preferably for compensating the strength of this scattering vector field component.

4. A method in accordance with any one of the claims 1 to 3,
**characterized in that**
the compensation magnet (300) is configured as a ring magnet and/or is arranged at the rotor (16).

5. A method in accordance with any one of the preceding claims,
**characterized in that**
the permanent magnet bearing (601, 701) comprises at least one magnetic hollow cylinder (603, 605, 703, 705) which has two or more sections (607, 609, 707, 709) following one another in the axial direction, with mutually adjacent sections (607, 609, 707, 709) having an at least substantially opposite magnetic pole orientation, and with the compensation magnet (300) being formed by a ring magnet separate from the hollow cylinder (603, 605, 703, 705) or being formed in a section of the hollow cylinder (603, 605, 703, 705).

6. A method in accordance with any one of the preceding claims,
**characterized in that**
the magnetic field (M) of the compensation magnet (300) is changed by a local change to the shape, in particular by a local removal of material, and/or by a local change to the material-specific permanent magnet properties, in particular by an at least partial local demagnetization.

7. A method in accordance with any one of the claims 2 to 6,
**characterized in that**
a processing function for controlling a processing device, in particular having least one laser (510), is determined by means of the measured function of the component (Kᵣ) of the scattering vector field in dependence on the angular position of the rotor-side part of the permanent magnet bearing (90, 601, 701); **in that** it is specified in the processing function how the shape of the compensation magnet (300) and/or its material-specific permanent magnet properties is/are to be changed; and **in that** the processing device is controlled by means of the processing function to process the shape and/or the material-specific permanent magnet properties of the compensation magnet (300).

8. A method in accordance with any one of the preceding claims,
**characterized in that**
a permanent magnet, in particular a ring magnet, is provided as the compensation magnet (300) and has a significant magnetization in the scattering vector field component (Kᵣ) to be reduced or to be compensated.

9. A method in accordance with any one of the preceding claims,
**characterized in that**
the compensation magnet (300) is processed in its installation position or is first processed and after the processing is arranged in the vacuum pump or in the rotation unit in its installation position.

10. A vacuum pump, in particular a turbomolecular pump, or a rotation unit for a vacuum pump, in particular for a turbomolecular pump, obtained by a method in accordance with any one of the preceding claims.

11. A vacuum pump, in particular a turbomolecular pump, or a rotation unit for a vacuum pump, in particular for a turbomolecular pump, which comprises a rotor (16); a stator and a permanent magnet bearing (90, 601, 701) which is configured for the mutual rotatable support of the rotor (16) and the stator and which is formed from a plurality of pairs of ring magnets (104, 106), wherein a respective one ring magnet (106) of a pair is arranged at the stator and the other ring magnet (104) of the pair is arranged at the rotor (16); and
wherein the magnetic field (M) of a compensation magnet (300) is configured or changed such that it reduces and preferably compensates at least one component (Kᵣ) of the magnetic scattering vector field of the permanent magnet bearing (90, 601, 701) at a reference point (P) outside the vacuum pump or the rotation unit,
**characterized in that**
the compensation magnet (300) is a permanent magnet provided in addition to the ring magnet pairs (104, 106) of the permanent magnet bearing (90).

12. A vacuum pump in accordance with claim 10 or claim 11,
**characterized in that**
at least one access passage (506) to the compensation magnet (300) arranged in its provided installation position is formed in the vacuum pump or in the rotation unit, in particular in a housing part (504) of the permanent magnet bearing, to locally exert laser light on the compensation magnet (300).

13. A vacuum pump in accordance with any one of the claims 10 to 12,
**characterized in that**
the compensation magnet (300) is arranged at an axial end of the rotor (16), in particular above a rotor-side permanent magnet ring stack of the magnet bearing (90); and/or
**in that** the permanent magnet bearing (601, 701) comprises at least one magnetic hollow cylinder (603, 605, 703, 705) which has two or more sections (607, 609, 707, 709) following one another in the axial direction, with mutually adjacent sections (607, 609, 707, 709) having an at least substantially opposite magnetic pole orientation, and with the compensation magnet (300) being formed by a ring magnet separate from the hollow cylinder (603, 605, 703, 705) or being formed in a section of the hollow cylinder (603, 605, 703, 705) which preferably contacts an axial end of the hollow cylinder (603, 605, 703, 705).

## Revendications

1. Procédé de réduction d'un champ magnétique vectoriel de diffusion d'une pompe à vide, en particulier d'une pompe turbomoléculaire, ou d'une unité rotative pour une pompe à vide, en particulier pour une pompe turbomoléculaire,
dans lequel
le champ magnétique vectoriel de diffusion est au moins partiellement généré par au moins un palier à aimant permanent (90, 601, 701) qui est conçu pour supporter mutuellement en rotation un rotor (16) et un stator de la pompe à vide ou de l'unité rotative et est formé de plusieurs paires d'aimants annulaires (104, 106), un aimant annulaire respectif (106) d'une paire étant disposé sur le stator et l'autre aimant annulaire (104) de ladite paire étant disposé sur le rotor (16),
et dans lequel
- au moins une composante (Kᵣ) du champ vectoriel de diffusion est déterminée à au moins un point de référence (P), et
- le champ magnétique (M) d'un aimant de compensation (300) est choisi ou modifié durablement de manière à réduire ou, de préférence, à compenser, la composante (Kᵣ) du champ vectoriel de diffusion au moins au point de référence (P);
**caractérisé en ce que**
l'aimant de compensation (300) est un aimant permanent prévu en supplément aux paires d'aimants annulaires (104, 106) du palier à aimant permanent (90).

2. Procédé selon la revendication 1,
**caractérisé en ce que**
au point de référence (P), lorsque la partie côté rotor du palier à aimant permanant (90, 601, 701) tourne autour d'un axe de rotation (14), une fonction de la composante (Kᵣ) du champ vectoriel de diffusion est mesurée pour au moins un tour complet de la partie côté rotor du palier à aimant permanent (90, 601, 701) autour d'un axe de rotation (14) en dépendance de la position angulaire de la partie côté rotor du palier à aimant permanent (90, 601, 701),
et le champ magnétique (M) de l'aimant de compensation (300) est choisi ou modifié de telle manière que, en particulier dans une position de montage prévue pour l'aimant de compensation, il réduit ou compense au moins approximativement la composante (Kᵣ) du champ vectoriel de diffusion mesurable au point de référence, indépendamment de la position angulaire de la partie côté rotor du palier à aimant permanent (90, 601, 701), et/ou
de telle manière que, en particulier dans une position de montage prévue pour l'aimant de compensation, il réduit ou, de préférence, compense, au moins les parties de la composante (Kᵣ) variables dans le temps et mesurables au point de référence (P), indépendamment de la position angulaire de la partie côté rotor du palier à aimant permanent (90, 601, 701).

3. Procédé selon la revendication 1 ou 2,
**caractérisé en ce que**
pour chaque composante du champ vectoriel de diffusion, au moins un aimant de compensation respectif (300) est utilisé pour réduire et de préférence pour compenser l'intensité de ladite composante du champ vectoriel de diffusion.

4. Procédé selon l'une des revendications 1 à 3,
**caractérisé en ce que**
l'aimant de compensation (300) est réalisé sous forme d'aimant annulaire et/ou est disposé sur le rotor (16).

5. Procédé selon l'une des revendications précédentes,
**caractérisé en ce que**
le palier à aimant permanent (601, 701) comprend au moins un cylindre creux magnétique (603, 605, 703, 705) qui comprend deux ou plusieurs portions (607, 609, 707, 709) qui se suivent dans la direction axiale, des portions mutuellement voisines (607, 609, 707, 709) ayant une orientation de pôle magnétique au moins sensiblement opposée, et l'aimant de compensation (300) est formé par un aimant annulaire séparé du cylindre creux (603, 605, 703, 705) ou est formé ou est destiné à être formé dans une portion du cylindre creux (603, 605, 703, 705).

6. Procédé selon l'une des revendications précédentes,
**caractérisé en ce que**
le champ magnétique (M) de l'aimant de compensation (300) est modifié en changeant localement la forme, en particulier en enlevant localement de la matière, et/ou en modifiant localement les propriétés magnétiques permanentes spécifiques au matériau, en particulier par une démagnétisation locale au moins partielle.

7. Procédé selon l'une des revendications 2 à 6,
**caractérisé en ce que**
en se basant sur la fonction mesurée de la composante (Kᵣ) du champ vectoriel de diffusion en dépendance de la position angulaire de la partie côté rotor du palier à aimant permanent (90, 601,701), une fonction d'usinage est déterminée pour commander un dispositif d'usinage, ayant en particulier au moins un laser (510), **en ce que**
dans la fonction d'usinage est spécifiée la façon de savoir comment la forme de l'aimant de compensation (300) et/ou ses propriétés magnétiques permanentes spécifiques au matériau doivent être modifiées, et **en ce que** le dispositif d'usinage est commandé à l'aide de la fonction d'usinage afin d'usiner la forme et/ou de modifier les propriétés magnétiques permanentes spécifiques au matériau de l'aimant de compensation (300).

8. Procédé selon l'une des revendications précédentes,
**caractérisé en ce que**
un aimant permanent, en particulier un aimant annulaire, est prévu comme aimant de compensation (300), qui présente une magnétisation distincte dans la composante (Kᵣ) du champ vectoriel de diffusion à réduire ou à compenser.

9. Procédé selon l'une des revendications précédentes,
**caractérisé en ce que**
l'aimant de compensation (300) est usiné dans sa position de montage ou bien il est usiné d'abord et, après l'usinage, il est placé dans sa position de montage dans la pompe à vide ou dans l'unité rotative.

10. Pompe à vide, en particulier pompe turbomoléculaire, ou unité rotative pour une pompe à vide, en particulier pour une pompe turbomoléculaire, obtenue par un procédé selon l'une des revendications précédentes.

11. Pompe à vide, en particulier pompe turbomoléculaire, ou unité rotative pour une pompe à vide, en particulier pour une pompe turbomoléculaire, comportant un rotor (16) et un stator et un palier à aimant permanent (90, 601, 701) qui est conçu pour supporter mutuellement en rotation le rotor (16) et le stator et qui est formé de plusieurs paires d'aimants annulaires (104, 106), un aimant annulaire respectif (106) d'une paire étant disposé sur le stator et l'autre aimant annulaire (104) de ladite paire étant disposé sur le rotor (16),
dans laquelle
le champ magnétique (M) d'un aimant de compensation (300) est réalisé ou modifié de manière à réduire et, de préférence, à compenser, au moins une composante (Kᵣ) du champ vectoriel de diffusion du palier à aimant permanent (90, 601, 701) à un point de référence (P) à l'extérieur de la pompe à vide ou de l'unité rotative ;
**caractérisée en ce que**
l'aimant de compensation (300) est un aimant permanent prévu en supplément aux paires d'aimants annulaires (104, 106) du palier à aimant permanent (90).

12. Pompe à vide selon la revendication 10 ou 11,
**caractérisée en ce que**
dans la pompe à vide ou dans l'unité rotative, en particulier dans une partie de boîtier (504) du palier à aimant permanent, il est prévu au moins un canal d'accès (506) à l'aimant de compensation (300) disposé dans sa position de montage prévue, afin d'appliquer localement une lumière laser à l'aimant de compensation (300).

13. Pompe à vide selon l'une des revendications 10 à 12,
**caractérisée en ce que**
l'aimant de compensation (300) est disposé à une extrémité axiale du rotor (16), en particulier au-dessus d'un empilement annulaire magnétique permanent côté rotor du palier à aimant (90), et/ou le palier à aimant permanent (601, 701) comprend au moins un cylindre creux magnétique (603, 605, 703, 705) qui comprend deux ou plusieurs portions (607, 609, 707, 709) qui se suivent dans la direction axiale, des portions mutuellement voisines (607, 609, 707, 709) ayant une orientation de pôle magnétique au moins sensiblement opposée, et
l'aimant de compensation (300) étant formé par un aimant annulaire séparé du cylindre creux (603, 605, 703, 705) ou étant formé dans une portion du cylindre creux (603, 605, 703, 705) qui est située de préférence à une extrémité axiale du cylindre creux (603, 605, 703, 705).
